# EUROPÄISCHE PATENTSCHRIFT

(11) **EP 2 647 924 B1**
(45) Veröffentlichungstag und Bekanntmachung des Hinweises auf die Patenterteilung: **06.01.2021**
(21) Anmeldenummer: 12002481.5
(22) Anmeldetag: 05.04.2012
(51) Int. Cl.: F24T 10/17, F24T 10/13, F24T 10/30, F28D 20/00

(54) **Erdwärmesonde**
Geothermal heat probe
Sonde géothermique

(43) Veröffentlichungstag der Anmeldung: 09.10.2013
(73) Patentinhaber: International Merger & Acquisition Corporation, Roseville CA 95661 (US); Lipp, Thomas, 04299 Leipzig (DE)
(72) Erfinder: Stadtherr, Otto, 04159 Leipzig (DE)
(74) Vertreter: Müller, Volkmar

(56) Entgegenhaltungen:
- EP-A1- 1 923 569
- WO-A1-01/04550
- DE-A1- 2 458 457
- DE-A1-102005 011 239
- DE-A1-102005 049 215
- DE-U1-202005 007 664
- DE-U1-202010 015 153

## Beschreibung

Die Erfindung betrifft eine Erdwärmesonde, welche zur Bereitstellung von Erdwärme dient.

Solche Vorrichtungen zur Gewinnung von Erdwärme sind aus dem Stand der Technik grundsätzlich bekannt, wobei derzeit ein großer Bedarf bezüglich verbesserter und effizienterer Erdwärmesonden für unterschiedliche Anwendungen besteht.
Eine dieser Anwendungen betrifft die Gewinnung von mechanischer Energie aus Erdwärme, wobei insbesondere eine Entspannung von mittels Erdwärme verdampften Kältemitteln in einer Strömungsmaschine dafür genutzt wird.

Solche bekannten Erdwärmesonden sind bspw. in EP 1194 723 B1 und in DE 203 20 409 U1 beschrieben. Diese Erdwärmesonden umfassen im Wesentlichen ein Innenrohr, durch welches verdampftes Kältemittel aufsteigen kann, und einen um das Innenrohr herum angeordneten Kanal, durch den flüssiges Kältemittel dem unteren Bereich der Erdwärmesonde zugeführt werden kann.

Aus der DE 102005049215 A1 ist eine Anlage zur Erdwärmegewinnung mit einer Erdwärmesonde bekannt. Diese Erdwärmesonde ist eine sogenannte "Fallsonde", d.h., dass flüssige Kältemittel fließt hauptsächlich an der Außenwand des Ringraumes zum Verdampfungsraum. Dabei ist am Übergang vom Ringraum und zum Verdampfungsraum ein Drosselventil zum Einstellen des Druckes angeordnet.
Die Außenwand des Ringraumes wird dabei nur teilweise benetzt, wobei die maximal benetzte Oberfläche nur ca. 25% der gesamten benetzbaren Oberfläche beträgt.
Die primäre Auswirkung dessen ist, dass damit auch nur ein Teil der Oberfläche für den Wärmeübergang zum Kältemittel zur Verfügung steht und somit pro Zeiteinheit nur eine entsprechende Wärmemenge übertragbar ist. Das vorhandene Potential wird somit nur unzureichend ausgenutzt.

Außerdem wird in der DE 102005049215 A1 ein Verfahren zur Gewinnung von mechanischer Energie aus Wärme zur Verfügung offenbart. Dieses Verfahren umfasst die Schritte:
- Entziehen von Wärme aus einer Wärmequelle, wobei die diese das Erdreich ist;
- Übertragen der entzogenen Wärme auf ein in einem geschlossenen Wärmekreislauf zirkulierendes Wärmefluid und Verdampfen des Wärmefluides mittels der übertragenen Wärme unter Erhöhung des Druckes im verdampften Wärmefluid; wobei das unter hohem Druck stehende Wärmefluid eine Strömungsmaschine durchströmt und dabei unter Abkühlung und Entspannung Arbeit leistet; das nach dem Durchströmen der Strömungsmaschine entspannte und abgekühlte Wärmefluid wieder kondensiert wird und der Druck des kondensierten Wärmefluides wieder mittels der Wärme der Erdwärme erhöht wird und das Wärmefluid derart ausgewählt ist, dass sich durch Ausnutzung einer Temperaturspreizung mit einer Maximaltemperatur von nicht mehr als 130°C eine Dampfdruckdifferenz von wenigstens 0,5 MPa realisieren lässt.

Aus der WO 2008/058663 A1 ist eine weitere Erdwärmesonde bekannt. Diese besitzt folgenden grundsätzlichen Aufbau: eine Kernsonde, welche zumindest umfasst: einen Verdampfungsraum und einen Steigraum, der als Steigrohr ausgebildet und zentrisch innerhalb eines Außenrohrs der Kernsonde angeordnet ist. Der Steigraum ermöglicht vom Verdampfungsraum ausgehend dem verdampften Kältemittel den Aufstieg. Die Mantelsonde umgibt die Kernsonde zumindest radial vollständig. Zwischen der Zylinderwand und der Kernsonde ist ein Zwischenraum vorhanden, welcher mit einem mit flüssigem Wärmemittel, nämlich einem Wasser-Äthanol-Gemisch, gefüllt ist

DE 20 2010 015153 U1, DE 10 2005 011239 A1, WO 01/04550 A1, DE 20 2005 007664 U1 und EP 1 923 569 A1 offenbaren weitere Erdwärmesonden.

Als Kältemittel kommen solche in Betracht, welche bei niedrigem Druck in einem Temperaturbereich von 0°C bis -30°C verdampfen, etwa Ammoniak (NH₃), Propan (C₃H₈), Butan (C₄H₁₀), Kohlendioxid (CO₂), etc. Erfindungsgemäß findet Ammoniak Verwendung.

Wenn die Temperatur des Erdreichs im Bereich des Verdampfungsraumes etwa 20°C beträgt, so verdampft das Kältemittel. Auf Grund der geringen Dichte des gasförmigen Kältemittels steigt dieses selbständig aus dem Verdampfungsraum über die Steigleitung auf.

Wird als Kältemittel Ammoniak (NH₃) verwendet, welches die Umwelt schädigen kann, wenn es aus der Erdwärmesonde in das umgebende Erdreich eindringt, sind besondere Vorkehrungen zu treffen. Ein Eindringen von Ammoniak in das umgebende Erdreich ist insbesondere dann schädlich, wenn die Gefahr besteht, dass das Ammoniak in wasserführende Schichten gelangt bzw. in die Atmosphäre ausgast; dies gilt es wirksam zu verhindern.

Aus dem Stand der Technik ist außerdem bekannt, dass Erdwärmesonden auch dazu verwendet werden, um permanent oder zeitweilig anfallende überschüssige Wärmeenergie in die Sonde in üblicher Art und Weise einzutragen und an das umgebende Erdreich durch Wärmeleitung abzugeben.

Aufgabe der Erfindung ist es, eine Erdwärmesonde bereit zu stellen, die bezüglich des Wärmeüberganges vom Wärmemittel zum Kältemittel einen höheren Wirkungsgrad aufweist, die in technisch einfacher Art und Weise eine Vergrößerung der wärmeübertragenden Oberfläche realisiert und einen kontinuierlichen Gaststrom des verdampften Kältemittels ermöglicht. Für das Kältemittel Ammoniak (NH₃) soll die erforderliche Sicherheit bezüglich eventueller Umweltschädigungen bestehen.

Die Aufgabe der Erfindung wird durch eine Wärmesonde mit den Merkmalen gemäß dem Anspruch 1 gelöst.

Der Anspruch 1 betrifft eine Erdwärmesonde umfassend eine Hauptsonde, welche zumindest umfasst:
- einen Hauptsonden-Wärmemittel-Kreislauf und einen Zubringersonden-Wärmemittel-Kreislauf,
- einen Verdampferraum, welcher eine Kältemittel-Kammer eines Gegenstromverdampfers und einen geschlossenen Kältemittel-Kreislauf umfasst, wobei der geschlossene Kältemittel-Kreislauf mit Ammoniak (NH₃) gefüllt ist,
- eine Steigleitung, welche mit dem unteren Ende des Verdampferraums verbunden ist,
- eine Zuleitung, welche mit dem Verdampferraum verbunden ist und im Kältemittel-Kreislauf angeordnet ist,
- einen Wärmetauscherraum , welcher eine Wärmemittel-Kammer des Gegenstromverdampfers umfasst und in einem Hauptsonden-Wärmemittel-Kreislauf eines Wärmemittels angeordnet ist und wobei die Erdwärmesonde des Weiteren eine Zubringersonde aufweist, welche zumindest umfasst:
- einen Außenmantel, welcher an seiner äußeren Seite im Betrieb der Erdwärmesonde vom Erdreich umschlossen ist,
- einen Sondenzwischenraum, welcher zumindest teilweise durch die innere Seite des Außenmantels und einem Sondenboden begrenzt wird, in welchem die Hauptsonde angeordnet ist, und
- zumindest einen Zulauf, für das flüssige Wärmemittel welcher in zumindest einem offenen Zubringersonden-Wärmemittel-Kreislauf eines Wärmemittels angeordnet ist,
wobei der Gegenstromverdampfer zumindest eine Kältemittel-Kammer und zumindest eine Wärmemittel-Kammer besitzt, wobei das Kältemittel (A) der Kältemittel-Kammer Ammoniak (NH₃) ist, die Erdwärmesonde eine Mess- und Regeleinrichtung besitzt, welche in die Prozesssteuerung zur Bereitstellung eines kontinuierlichen gasförmigen Kältemittelstromes integriert ist, und wobei der Gegenstromverdampfer ein dreiteiliger Gegenstromverdampfer ist, der hierbei aus drei Segmenten mit analogem Aufbau besteht, die in Reihe verbunden sind, so dass der Verdampferraum aus drei in Reihe angeordneten Teilbereichen besteht und wobei die Zubringersonde ein Auffangbecken für aus der Hauptsonde austretendes Kältemittel, nämlich Ammoniak (NH₃), ist.

Eine erfindungsgemäße Erdwärmesonde ist in üblicher Art und Weise von der Erdoberfläche aus in ein Bohrloch versenkbar, besitzt ein im Bereich der Erdoberfläche anzuordnendes oberes Ende und ein in das Bohrloch zu versenkendes unteres Ende.

Die abhängigen Ansprüche 2 bis 4 enthalten vorteilhafte Ausgestaltungen der Erfindung.

Bevorzugt ist, dass die zumindest eine Kältemittel-Kammer 4.1 durch die Wärmemittel-Kammer 4.2 im Gegenstromverdampfer 4 umschlossen wird. Diese Anordnung ist besonders effektiv bezüglich der zu realisierenden Wärmeübertragung.

Erfindungsgemäß ist vorgesehen, dass die Erdwärmesonde 1 eine Mess- und Regeleinrichtung 8 besitzt, welche in die Prozesssteuerung zur Bereitstellung eines kontinuierlichen gasförmigen Kältemittelstromes integriert ist.

Die in üblicher Art und Weise gewonnenen Messdaten, beispielsweise durch Temperatur- und Druckmesseinrichtungen ermittelte Temperatur und Druckangaben, werden durch die Mess- und Regeleinrichtung 8 insbesondere dazu verwendet, um zumindest die Kreisläufe: Kältemittel-Kreislauf, Hauptsonden-Wärmemittel-Kreislauf sowie Zubringersonden-Wärmemittel-Krcislauf, der Art aufeinander abzustimmen, dass über die Steigleitung, aus dem Verdampferraum kommend, ein möglichst konstanter Medienstrom anliegt. Dieser konstante Medienstrom ist insbesondere notwendige Voraussetzung, um die erfindungsgemäße Erdwärmesonde als Bestandteil einer kontinuierlich betreibbaren Erdwärme-Gewinnungsanlage zur Erzeugung mechanischer Energie, wobei diese Anlage zumindest eine Strömungsmaschine besitzt, zu verwenden.

Die Zubringersonde 3 der erfindungsgemäßen Erdwärmesonde 1 kann, zumindest im Falle einer eventuellen Havarie, als Auffangbecken für aus der Hauptsonde 2 austretendes Kältefluid, d. h. Ammoniak (NH₃), dienen.

Die Zubringersonde 3 besitzt einen Außenmantel 3.1, der insbesondere eine hohle zylindrische Form besitzt, und einen Sondenboden 3.3. Die Anmessungen des Außenmantels 3.1 sind der Art gewählt, dass sich die Hauptsonde 2 berührungslos in die Zubringersonde 3 einbringen lässt.

Funktionsbedingt ist der Sondenzwischenraum 3.2 zwischen dem Außenmantel 3.1 und der Hauptsonde 2 mit einem flüssigen Medium gefüllt, welches zumindest einen flüssigen Wärmeträger und ein Frostschutzmittel enthält.

Das Frostschutzmittel, wie beispielsweise Alkohol oder Glykol, verhindert dabei ein Gefrieren des flüssigen Wärmeträgers, beispielsweise des Wassers, bei diesbezüglich niedrigen Verdampfungstemperaturen.

Dieses flüssige Medium wird primär als Wärmeträger, welcher primär der Wärmeleitung dient, verwendet, mit welchem Erdwärme zur Hauptsonde oder überschüssige Wärme zur Hauptsonde und/oder aus der Erdwärmesonde in das umgebende Erdreich durch Wärmeleitung geleitet wird.

Das flüssige Wärmemittel wird somit sowohl im vorzugsweise geschlossenen Hauptsonden-Wärmemittel-Kreislauf 6 und als auch im vorzugsweise offen Zubringersonden-Wärmemittel-Kreislauf 7 erfindungsgemäß eingesetzt.

Überschüssige Abwärme kann somit in einfachster Art und Weise in das Erdreich geleitet werden, wodurch beispielsweise das Ausbilden eines Frostmantels um die Erdwärmesonde 1 unterdrückt wird bzw. überschüssige Wärme im Erdreich gespeichert wird.

Die Saugleitung 7.2 des Zubringersonden-Wärmemittel-Kreislaufs 7 kann neben ihrer primären Funktion in diesem Kreislauf auch noch die Funktion ausführen, das flüssige Medium im Falle einer Kontamination vollständig aus dem Sondenzwischenraum 3.2 abzusaugen. Diese Saugleistung 7.2 erstreckt sich vorzugsweise bis zum Boden der Zubringersonde 3.

Der Zulauf 7.1 des Zubringersonden-Wärmemittel-Kreislaufs 7 ist vorzugsweise im oberen Bereich der Zubringersonde 3 angeordnet.

Alternativ besteht die Möglichkeit, mehr als einen Zulauf 7.1 zu verwenden, wobei diese höhenversetzt angeordnet sein können. Damit besteht eine Möglichkeit, unterschiedliche Wärmemengen mit ggf. unterschiedlichem Temperaturniveau einzubringen, um eine gewünschte Temperaturverteilung in der Erdwärmesonde 1 zu erlangen, die beispielsweise erforderlich ist, um ein kontinuierliches Verfahren zum Betreiben einer Erdwärmesonde 1 zu erlangen.

Als flüssiges Medium kann beispielsweise ein unter Umweltgesichtspunkten unbedenkliches Wasser-Alkohol-Gemisch, bspw. ein Wasser-Äthanot-Gemisch, ein Wasser-Glykol-Gemisch oder eine Kombination aus beidem dienen. Der Alkohol bzw. das Glykol verhindert dabei ein Gefrieren des Wassers bei diesbezüglich niedrigen Verdampfungstemperaturen.

Die Bauteile der Erdwärmesonde 1 sind aus üblichen korrosionsbeständigen Materialien hergestellt, welche möglichst eine gute Wärmeleitung ermöglichen.

Die Erdwärmesonde 1 ist insbesondere für Bohrlochtiefen von bis zu 42 m Tiefe bestimmt, wobei größere Tiefen im Sinne der Erfindung grundsätzlich möglich, jedoch technologisch nicht notwendig sind.

Die Aufgabe der Erfindung wird außerdem durch ein Verfahren mit den Merkmalen des Anspruchs 4 gelöst.

Die Aufgabe der Erfindung wird außerdem durch die Merkmale der Ansprüche 5 bis 7 und 10 gelöst.

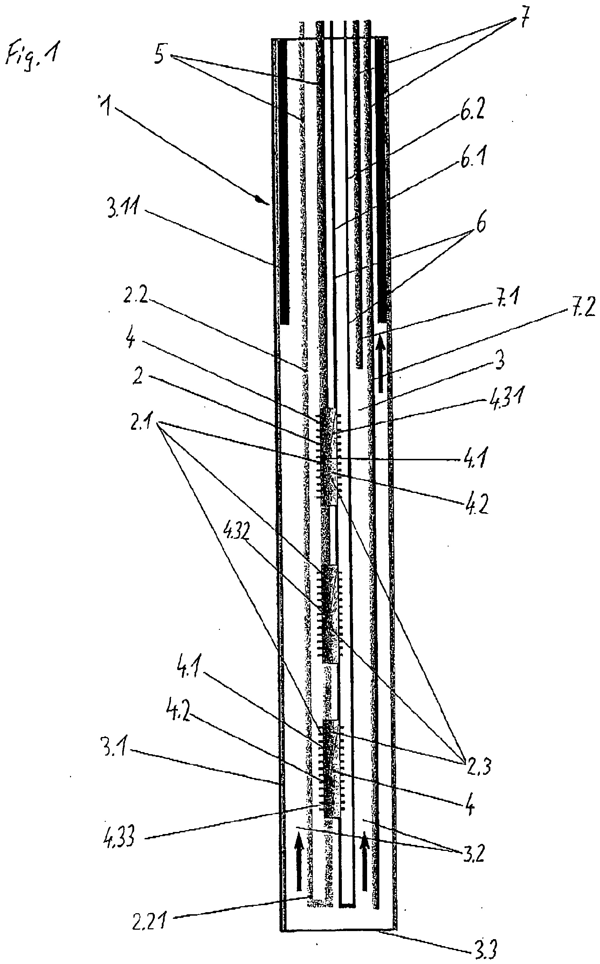

Weitere Merkmale, Eigenschaften und Vorteile der vorliegenden Erfindung ergeben sich aus der nachfolgenden Beschreibung von Ausfubrungsbeispielen unter Bezugnahme auf die beiliegende Figur 1.
Fig. 1 zeigt ein Ausführungsbeispiel für eine erfindungsgemäße Erdwärmesonde.

Das Ausführungsbeispiel für die erfindungsgemäße Erdwärmesonde wird nachfolgend mit Bezug auf Fig. 1 beschrieben.

Die Erdwärmesonde 1 umfasst zumindest eine Zubringersonde 3, welche einen zylinderförmigen Grundkörper, den Außenmantel 3.1, beispielsweise ein Stahlrohr: 355,6 mm x 5,6 mm, besitzt, sowie eine in der Zubringersonde 3 angeordnete Hauptsonde 2. In radialer Richtung berühren sich, zumindest in Einbaulage, die Zubringersonde 3 und der Außenmantel 3.1 nicht, so dass zwischen diesen ein Zwischenraum besteht, der Sondenzwischenraum 3.2. Der Außenmantel 3.1 ist an seinem unteren Ende 3.11 mit dem Sondenboden 3.3 verbunden und flüssigkeitsdicht verschlossen.

Im Sinne der Erfindung können Außenmantel 3.1 und Sondenboden 3.3 auch nur aus einem Teil bestehen, beispielsweise dann, wenn diese aus einem Kunststoffmaterial bestehen, wobei dieses Kunststoffmaterial eine gute Wärmeleitung im Sinne der Erfindung ermöglichen muss.

Üblicherweise ist der Außenmantel 3.1 aus mehreren Rohrabschnitten aufgebaut, die nacheinander in üblicher Art und Weise im Bohrloch im Erdreich versenkt und verbunden werden. Beim Versenken in ein Bohrloch werden die Rohrabschnitte beispielsweise durch Verschweißen im Falle von metallischen Rohrabschnitten flüssigkeitsdicht miteinander verbunden, so dass die Zubringersonde 3 einen zum umgebenden Erdreich hin flüssigkeitsdichten Hohlraum bildet.

Die in der Zubringersonde 3 vorzugsweise zentrisch angeordnete Hauptsonde 2 erstreckt sich bis dicht an den Sondenboden 3.3 und ist von diesem beabstandet.

Die Hauptsonde 2, angeordnet in der Zubringersonde 3, bedarf einer mechanischen Fixierung, in Figur 1 nicht dargestellt, wobei diese in üblicher Art und Weise erfolgt.

Zumindest im funktionsbereiten Zustand der Erdwärmesonde 1 ist zumindest der Sondenzwischenraum 3.2 mit einem flüssigen Medium befüllt; im Ausführungsbeispiel mit ca. 3.000 Liter eines Wasser-Glykol-Gemischs.
Das flüssige Medium ist bezüglich Art und Zusammensetzung in üblicher Art und Weise so gewählt, dass es bei einem etwaigen Austritt aus der Zubringersonde 3 ins Erdreich keine Gefahr für die Umwelt darstellt.
Außerdem ist die Zusammensetzung des flüssigen Mediums so gewählt, dass dieses auch bei Temperaturen von bis zu -20°C und vorzugsweise bis zu -30°C im Sondenzwischenraum 3.2 nicht gefriert. Ein solches flüssiges Medium, welches diese genannten Anforderungen erfüllt und im vorliegenden Ausführungsbeispiel zur Anwendung kommt ist beispielsweise ein Gemisch aus Wasser und Glykol (Wasser-Glykol-Gemisch) im Verhältnis von 5:1 bezogen auf das Volumen.
Das Glykol dient als Frostschutzmittel, um ein Einfrieren des Wassers in der Hauptsonde 2 zu vermeiden.

Alternativ zu Glykol kann jedes andere auf dem freien Markt verfügbare Frostschutzmittel im Sinne der Erfindung eingesetzt werden, hilfsweise auch Salzwasser oder mit Leichtöl versetztes Wasser, was ebenfalls das Einfrieren verhindert.

Statt Glykol können aber auch andere, das Gefrieren des Wassers verhindernde Zusätze Verwendung finden, beispielsweise andere Alkohole oder Äthanol.

Die Hauptsonde 2 stellt die eigentliche Arbeitssonde der Erdwärmesonde 1 dar. Sie umfasst u. a. einen Verdampfungsraum 2.1, der in zumindest einem Bereich des Gegenstromverdampfers 4 angeordnet ist. Der Verdampferraum 2.1, welcher aus zumindest einer Kältemittel-Kammer 4.1 eines Gegenstromverdampfers 4 besteht, ist in einem geschlossenen Kältemittel-Kreislauf 5 angeordnet.
Der Gegenstromverdampfers 4 besitzt eine Wärmeträger-Kammer 4.2, welche zumindest eine Kältemittel-Kammer 4.1 umschließt. Die Kältemittel-Kammer 4.1 dient dabei als Verdampfungsraum 2.1.
Der Gegenstromverdampfers 4 ist in diesem Ausführungsbeispiel ein mehrteiliger Gegenstromverdampfer 4, der hierbei aus drei Segmenten 4.31, 4.32 und 4.33, beispielsweise mit jeweils 10 KW Leistung, besteht, die jeweils einen analogen Aufbau besitzen und in Reihe angeordnet und verbunden sind.
Damit besteht der Verdampferraum 2.1 in diesem Ausführungsbeispiel aus drei in Reihe angeordneten Teilbereichen des Verdampferraumes 2.1, wobei jedes dieser Teilbereiche in einem der Segmente 4.31, 4.32 und 4.33 angeordnet ist. Die Segmente 4.31, 4.32 und 4.33 des Gegenstromverdampfers 4 sind durch Verbindungsleitungen mit einander verbunden, welche integrale Bestandteile des geschlossenen Kältemittel-Kreislaufes 5 sind. Die Segmente 4.31, 4.32 und 4.33 sind vorzugsweise im unteren Teil der Hauptsonde 2 angeordnet und durch Streben sowie am Sondenboden 3.3, in Figur 1 nicht dargestellt, befestigt.

Der Gegenstromverdampfers 4 besitzt zumindest einem Wärmetauscherraum 2.3, welcher aus zumindest einer Wärmemittel-Kammer 4.2 des Gegenstromverdampfers 4 besteht und in einem geschlossenen Hauptsonden-Wärmemittel-Kreislauf 6 eines Wärmemittels angeordnet ist.

Der Wärmetauscherraum 2.3 besteht in diesem Ausführungsbeispiel (Figur 1) aus drei in Reihe angeordneten Teilbereichen des Wärmetauscherraumes 2.3, wobei jedes dieser Teilbereiche in einem der Segmente 4.31, 4.32 und 4.33 angeordnet ist. Die Segmente 4.31,4.32 und 4.33 des Gegenstromverdampfers 4 sind durch Verbindungsleitungen mit einander verbunden und integrale Bestandteile des geschlossenen Hauptsonden-Wärmemittel-Kreislaufs 6. Am unteren Ende des Segmentes 4.33 ist am Wärmetauscherraum 2.3 eine Saugleitung 6.1 angeordnet, welcher zum Ansaugen des Wärmemittels im Hauptsonden-Wärmemittel-Kreislauf 6 dient. Das Ansaugen des Wärmemittels wird dabei durch zumindest eine übliche Saugvorrichtung, wie eine übliche Flüssigkeitspumpe, realisiert, welche ebenso integraler Bestandteil des Hauptsonden-Wärmemittel-Kreislaufs 6 ist, wie Wärmetauscher und dgl., die in Figur 1 nicht dargestellt sind. Der Rückfluss des Wärmemittels im Hauptsonden-Wärmemittel-Kreislauf 6 erfolgt über eine Zulauf 6.2. Der Rückfluss des Wärmemittels aus einem offenen Zubringersonden-Wärmemittel-Kreislauf 7 kommend in den Sondenzwischenraum 3.2 erfolgt über zumindest einen Zulauf 7.1.

Zusätzlich kann der Außenmantel 3.1. der Zubringersonde 3 im Bereich auf den ersten 10 Metern, von der Erdoberfläche aus gesehen, mit einer üblichen thermischen Isolation 1.11 versehen sein.

Die Erdwärmesonde kann eine Mess- und Regeleinrichtung 8, in Figur 1 nicht dargestellt, besitzen, welche in die Prozesssteuerung zur Bereitstellung eines kontinuierlichen gasförmigen Kältemittelstromes integriert ist. Diese Mess- und Regeleinrichtung 8 erfasst und wertet alle relevanten Prozessdaten, wie Temperatur, Druck und Volumenströme, der Erdwärmesonde 1 in üblicher Art und Weise aus und regelt insbesondere die Hauptsonden-Wärmemittel-Kreislaufs 6, Zubringersonden-Wärmemittel-Kreislauf 7 und den Kältemittel-Kreislauf 5. Damit ist ermöglicht, die Bereitstellung eines kontinuierlichen gasförmigen Kältemittelstromes zu sichern, welcher insbesondere für eine Verwendung der Erdwärmesonde als Bestandteil einer kontinuierlich betreibbaren Anlage zur Erzeugung von mechanischer Energie erforderlich ist, bei welcher die Erzeugung von mechanischer Energie primär durch Entspannung eines gasförmigen Mediums in einer Strömungsmaschine erfolgt.

Nachfolgend wird die grundsätzliche Funktionsweise der Erdwärmesonde 1 näher erläutert:
Der mehrere Kammern besitzende Gegenstromverdampfer 4 wird im Verdampferraum 2.1 mit dem Kühlmittel, Ammoniak (NH₃), mit einer Temperatur von ca. -15°C durchströmt, und im Wärmetauscherraum 2.3 mit einem Wasser-Glykolgemisch mit einer Temperatur von ca. +4°C bis +7°C gefüllt.

Durch andere Kühlmittel, z.B. CO², Propan, etc., als Ersatz für NH₃ würde die Effektivität und damit die Gasfördermenge verringert.

Durch die Temperaturspreizung der beiden Flüssigkeiten im Gegenstromverdampfer 4 entsteht eine chemische Reaktion, welche im Ergebnis das benötigte Ammoniakgas bereitstellt.

Die Verdampfung beginnt in Strömungsrichtung im ersten Segment 4.31, der drei in Reihe 4.31, 4.32 und 4.33 geschalteten Segmente des Gegenstromverdampfers 4 (Röhrentauscher) und bildet Nassdampf.

Dieser Nassdampf wird im zweiten Segment 4.32 des Gegenstromverdampferns 4 (Röhrentauscher) abermals verdampft und im dritten Segment 4.33 des Gegenstromverdampfems 4, insbesondere in der Bauart eines Röhrentauschers, für die letzte Verdampfung überführt. Die geförderte Menge des nach der letzten Verdampfung nunmehr gasförmigen Kältemittels im dritten Segment 4.33 des Gegenstromverdampfers 4 beträgt ca. 60 m³/h und steht als Sattdampf mit einem Druck von ca. 2 bis 3 bar zur Verfügung.

Am unteren Ende des dritten Segments 4.33 des Gegenstromverdampfers 4 steigt der Sattdampf auf natürlichem Wege durch die nach oben geführte Steigleitung 2.2 zur Erdoberfläche.

### Liste der Bezugszeichen

- 1: Erdwärmesonde
- 2: Hauptsonde
- 2.1: Verdampferraum
- 2.2: Steigleitung
- 2.21: Steigleitung, unteres Ende
- 2.3: Wärmetauscherraum
- 3: Zubringersonde
- 3.1: Außenmantel
- 3.11: Isolation, thermische
- 3.2: Sondenzwischenraum
- 3.3: Sondenboden
- 4: Gegenstromverdampfer
- 4.1: Kältemittel-Kammer
- 4.2: Wärmemittel-Kammer
- 4.31, 4.32 und 4.33: Segmente des Gegenstromverdampfers
- 5: Kältemittel-Kreislauf
- 5.1: Kältemittelleitung
- 6: Hauptsonden-Wärmemittel-Kreislauf
- 6.1: Saugleitung
- 6.2: Zulauf
- 7: Zubringersonden-Wärmemittel-Kreislauf
- 7.1: Zulauf
- 7.2: Saugleitung

## Patentansprüche

1. Erdwärmesonde (1), umfassend eine Hauptsonde (2), welche zumindest umfasst:
- einen Hauptsonden-Wärmemittel-Kreislauf (6) und einen Zubringersonden-Wärmemittel-Kreislauf (7),
- einen Verdampferraum (2.1), welcher eine Kältemittel-Kammer (4.1) eines Gegenstromverdampfers (4) und einen geschlossenen Kältemittel-Kreislauf (5) umfasst, wobei der geschlossene Kältemittel-Kreislauf (5) mit Ammoniak, d. h. NH_{3,} als Kältemittel gefüllt ist, - eine Steigleitung (2.2), welche mit dem unteren Ende (2.21) des Verdampferraums (2.1) verbunden ist, - eine Zuleitung, welche mit dem Verdampferraum (2.1) verbunden ist und im Kältemittel-Kreislauf (5) angeordnet ist, - einen Wärmetauscherraum (2.3), welcher eine Wärmemittel-Kammer (4.2) des Gegenstromverdampfers (4) umfasst und in einem Hauptsonden-Wärmemittel-Kreislauf (6) eines Wärmemittels angeordnet ist, und wobei die Erdwärmesonde (1) des Weiteren eine Zubringersonde aufweist, welche zumindest umfasst: - einen Außenmantel (3.1), welcher an seiner äußeren Seite im Betrieb der Erdwärmesonde vom Erdreich umschlossen ist, - einen Sondenzwischenraum (3.2), welcher zumindest teilweise durch die innere Seite des Außenmantels (3.1) und einem Sondenboden (3.3) begrenzt wird, in welchem die Hauptsonde (2) angeordnet ist, und
- zumindest einen Zulauf (7.1), für das flüssige Wärmemittel, welcher in zumindest einem offenen Zubringersonden-Wärmemittel-Kreislauf (7) eines Wärmemittels angeordnet ist, wobei der Gegenstromverdampfer (4) zumindest eine Kältemittel-Kammer (4.1) und zumindest eine Wärmemittel-Kammer (4.2) besitzt und die Erdwärmesonde (1) eine Mess- und Regeleinrichtung (8) besitzt, welche in die Prozesssteuerung zur Bereitstellung eines kontinuierlichen gasförmigen Kältemittelstromes integriert ist, und wobei der Gegenstromverdampfer (4) ein dreiteiliger Gegenstromverdampfer (4) Z ist, der hierbei aus drei Segmenten mit analogem Aufbau besteht, die in Reihe verbunden sind, so dass der Verdampferraum (2.1) aus drei in Reihe angeordneten Teilbereichen besteht und wobei die Zubringersonde (3) ein Auffangbecken für das aus der Hauptsonde (2) austretende Kältemittel ist.

2. Erdwärmesonde gemäß Anspruch 1, **dadurch gekennzeichnet, dass** die zumindest eine Kältemittel-Kammer (4.1) durch die Wärmemittel-Kammer (4.2) im Gegenstromverdampfer (4) umschlossen wird.

3. Erdwärmesonde gemäß Anspruch 1, **dadurch gekennzeichnet, dass** das Wärmemittel (A) im Hauptsonden-Wärmemittel-Kreislauf (6) und im Zubringersonden-Wärmemittel-Kreislauf (7) zumindest Wasser und ein Frostschutzmittel enthält.

4. Verfahren zum Betreiben einer Erdwärme-Gewinnungsanlage, wobei diese zumindest eine Erdwärmesonde (1) gemäß einem der Ansprüche 1 bis 3 besitzt, wobei das Kältemittel und das Wärmemittel den Gegenstromverdampfer (4) im Gegenstrom durchströmen.

5. Verwendung einer Erdwärmesonde (1) gemäß den Ansprüchen 1 bis 3 4 als Bestandteil einer kontinuierlich betreibbaren Erdwärme-Gewinnungsanlage zur Erzeugung mechanischer Energie, wobei diese Anlage zumindest eine Strömungsmaschine besitzt.

6. Verwendung der Erdwärmesonde (1) gemäß den Ansprüchen 1 bis 3 als hermetische Sicherheitssonde, welche als Kältemittel Ammoniak verwendet.

7. Verwendung der Erdwärmesonde (1) gemäß den Ansprüchen 1 bis 3 für Bohrlochtiefen von bis zu 42 m Tiefe.

## Claims

1. A geothermal probe (1), comprising a main probe (2), which at least comprises:
- a main probe heat medium circuit (6) and a feeder probe medium circuit (7),
- an evaporation chamber (2.1), which comprises a refrigerant chamber (4.1) of a counterflow evaporator (4) and a closed refrigerant circuit (5), whereby the closed refrigerant circuit (5) is filled with ammonia, i.e. NH₃, as the refrigerant,
- a riser (2.2), which is connected to the lower end (2.21) of the evaporation chamber (2.1),
- a supply pipe (2.5), which is connected to the evaporation chamber (2.1) and is arranged in the refrigerant circuit (5),
- a heat exchanger chamber (2.3), which comprises at least one heat medium chamber (4.2) of the counterflow evaporator (4) and is arranged in a maln probe heat medium circuit (6) of a heating medium, whereby the geothermal probe (1) additionally has a feeder probe (3), which comprises at least:
- an outer jacket (3.1), which is enclosed on its outside by the soil when the geothermal probe is In operation,
- a probe gap (3.2), which is at least partially bounded by the inside of the outer jacket (3.1) and a probe bottom (3.3), in which the main probe (2) is arranged, and
- at least one inlet (7.1), for the fluid heat medium, which is arranged In at least one open feeder probe heat medium circuit (7), whereby the counterflow evaporator (4) has at least one refrigerant chamber (4.1) and at least one heat medium chamber (4.2) and the geothermal probe (1) has a measurement and control device (8), which is integrated into the process control system to provide a continuous gaseous refrigerant flow, and whereby the counterflow evaporator (4) is a three stage counterflow evaporator (4), which comprises three segments of similar design connected in series so that the evaporator chamber (2.1) comprises three sections arranged in series and whereby the feeder probe (3) is a catch basin for the refrigerant escaping from the main probe (2).

2. A geothermal probe according to claim 1, **characterized in that** the at least one refrigerant chamber (4.1) is enclosed by the heat medium chamber (4.2) in the counterflow evaporator (4).

3. A geothermal probe according to claim 1, **characterized in that** the heat medium (A) in the main probe heat medium circuit (6) and in the feeder probe heat medium circuit (7) contains at least water and an antifreeze.

4. A method for operating a geothermal energy generation system, whereby said system has at least one geothermal probe (1) according to one of claims 1 to 3, whereby the refrigerant and the heat medium flow through the counterflow evaporator (4) in opposite directions.

5. Use of a geothermal probe (1) according to claims 1 to 3 as part of a continuously operable geothermal energy generation system for the generation of mechanical energy, whereby this system has at least one turbomachine.

6. Use of the geothermal probe (1) according to claims 1 to 3 as a hermetic safety probe, which uses ammonia as the refrigerant.

7. Use of the geothermal probe (1) according to claims 1 to 3 for boreholes up to 42 m in depth.

## Revendications

1. Sonde géothermique (1), comprenant une sonde principale (2), qui comprend au moins;
- un circuit avec fluide caloporteur pour sonde principale (6) et un circuit avec fluide caloporteur pour sonde d'alimentation (7),
- une chambre pour l'évaporateur (2.1), qui comprend une chambre pour le refrigerant (4.1) d'un évaporateur à effet à contre-courant (4) et un circuit fermé avec refrigerant (5), le circuit fermé avec réfrigérant (5) étant rempli d'ammoniac, c'est-à-dire NH3 comme réfrigérant,
- une colonne montante (2.2), qui est raccordée à l'extrémité inférieure (2.21) de la chambre pour l'évaporateur (2.1),
- une conduite d'alimentation, qui est raccordée à la chambre pour l'évaporateur (2.1) et placée dans le circuit avec réfrigérant (5),
- une chambre pour l'échangeur de chaleur (2.3), qui comprend une chambre pour le fluide caloporteur (4.2) de l'évaporateur à effet à contre-courant (4) et qui placée dans un circuit avec fluide caloporteur pour sonde principale (6) d'un fluide caloporteur,
et la sonde géothermique (1) comprenant en outre une sonde d'alimentation, qui comprend au moins:
- une enveloppe extérieure (3.1), qui est entourée sur son côté extérieur lors du fonctionnement de la sonde géothermique par de la terre,
- un espace intermédiaire pour sonde (3.2), qui est délimité au moins en partie par le côté Intérieur de l'enveloppe extérieure (3.1) et un sol pour sonde (3.3), dans lequel est placée une sonde principale (2), et
- au moins une arrivée (7.1), pour le fluide caloporteur, qui est placée au moins dans un circuit ouvert avec fluide caloporteur pour sonde d'alimentation (7) d'un fluide caloporteur, l'évaporateur à effet à contre-courant (4) ayant au moins une chambre pour réfrigérant (4.1) et au moins une chambre pour fluide caloporteur (4.2)
et
la sonde géothermique (1) ayant un dispositif de réglage et de mesure (8),
qui est intégré dans la commande de processus pour fournir un flux continu de réfrigérant gazeux et
l'évaporateur à effet à contre-courant (4) étant un évaporateur à trois voles à effet à contre-courant (4), qui est composé de trois segments avec une construction identique, qui sont raccordés en série, de sorte que la chambre pour l'évaporateur (2.1) est composée de trois secteurs partiels disposés en série et
la sonde d'alimentation (3) étant un bac collecteur pour le réfrigérant sortant de la sonde principale (2).

2. Sonde géothermique selon la revendication 1, **caractérisée par le fait qu'**au moins une chambre pour réfrigérant (4,1) est entourée par la chambre pour fluide caloporteur (4.2) dans l'évaporateur à effet à contre-courant (4).

3. Sonde géothermique selon la revendication 1, **caractérisée par le fait que** le fluide caloporteur (A) contient dans le circuit avec fluide caloporteur pour sonde principale (6) et dans le circuit avec fluide caloporteur pour sonde d'alimentation (7) au moins de l'eau et un antigel.

4. Procédé pour l'exploitation d'une installation de production de chaleur géothermique, celle-ci possédant au moins une sonde géothermique (1) selon les exigences 1 à 3, le réfrigérant et le fluide caloporteur traversant à contre-courant l'évaporateur à effet à contre-courant (4).

5. Utilisation d'une sonde géothermique (1) selon les revendications 1 à 3 en tant que composant d'une Installation de production de chaleur géothermique fonctionnant en continu pour produire une énergie mécanique, cette Installation possédant au moins une turbomachine.

6. Utilisation d'une sonde géothermique (1) selon les revendications 1 à 3 en tant que sonde de sécurité hermétique, qui utilise de l'ammoniac comme réfrigérant.

7. Utilisation d'une sonde géothermique (1) selon les revendications 1 à 3 pour des trous de perçage jusqu'à 42 m de profondeur.
